# EUROPEAN PATENT APPLICATION

(11) **EP 0 767 576 A1**
(43) Date of publication of application: **09.04.1997**
(21) Application number: 95202675.5
(22) Date of filing: 05.10.1995
(51) Int. Cl.: H04N 1/393

(54) **Method of producing slides of radiographic images**

(71) Applicant: AGFA-GEVAERT naamloze vennootschap, B-2640 Mortsel (BE)
(72) Inventor: Buytaert, Tom c/o Agfa-Gevaert N.V., B-2640 Mortsel (BE); Hayen, Lucien c/o Agfa-Gevaert N.V., B-2640 Mortsel (BE)

(57) **Abstract**

From a digital image representation of a radiographic image that is retrieved from an electronic archive, a low resolution version is extracted having a resolution equal to the resolution of a slide. A hard copy image of said low resolution version is reproduced on photographic material and used for the production of a slide.

## Description

### 1. Field of the invention.

The present invention is in the field of digital radiography and more specifically relates to a system for generating slides of radiographic images.

### 2. Description of the state of the art

There exists a need among radiologists to show radiographic images to a broad audience. Indeed, for example on staff meetings, congresses, seminars etc. radiographic images are displayed and used to illustrate the contents of speeches, presentations, reports etc.

Also for didactic purposes radiographic images are displayed to groups of students or medical personnel at universities and hospitals.

Especially with regard to a newly introduced technique introduction courses, presentations, evaluations etc. are often held. Examination of the radiographic images produced by the technique under evaluation is commonly part of these courses, presentations and evaluations.

In classical radiography examination of a radiographic image was commonly performed by inspecting the radiographic film that had been exposed to the radiation image, on a light-box.

However, it is clear that this kind of procedure was not very convenient in case the image was to be shown to a rather large group of people. It was impossible to annotate points of interest on the radiographic film in such a way that these points could be inspected simultaneously by every member of the public.

Commonly the presentation was then organised so that groups of people could gather around a light-box one after the other and the explanation or commentary was repeated for each group.

Recently a wide variety of new image acquisition techniques have been developed that have in common that they render a digital representation of an image. For many examination types these techniques have gained a lot of importance.

Among these new techniques are computerised tomography, nuclear magnetic resonance, ultrasound, detection of a radiation image by means of a CCD sensor or a video camera, radiographic film scanning etc.

Still another technique has been developed wherein a radiation image, for example X-rays transmitted by an object, is stored in a screen comprising a photostimulable phosphor such as one of the phosphors described in European patent application 503 702 published 16.09.92 and in US Ser. 07/842,603.

The procedure for reading out the stored radiation image consists of scanning the screen with stimulating radiation, such as laser light of the appropriate wavelength, detecting the light emitted upon stimulation and converting the emitted light into an electric representation for example by means of a photomultiplier.

This technique further comprises digitizing and processing said electric signal.

After read-out of the image stored in the photostimulable phosphor screen, one disposes of an electric (e.g. digital) image representation that can be applied to a monitor for display of the corresponding visual image.

The digital image representation of a medical image that is acquired by one of these techniques can further be applied to a recorder for recording a hard copy image, for example on film. This hard-copy can be viewed on a lightbox for diagnostic purposes.

### 3. Objects of the present invention

It is an object of the present invention to provide a method for producing a tool for displaying radiographic images to a broad audience.

It is a further object to provide such a tool that is adapted to the characteristics of digital radiographic image acquisition techniques.

It is a further object to provide such a tool that permits evaluation of digital image processing techniques.

Still further objects will become apparent from the description hereafter.

### 4. Statement of the invention

The objects of the present invention are achieved by a method of producing a slide of a radiographic image represented by a digital image representation that has been stored in an electronic archive comprising the steps of
(i) identifying said radiographic image,
(ii) retrieving the digital image representation of said radiographic image from an electronic archive,
(iii) extracting from said digital representation a reduced version representing a low resolution version of said radiographic image, said reduced version having a resolution equal to the resolution of a slide,
(iv) applying said reduced version of the digital image representation to a hard copy recorder to generate a visible image having a slide format on a transparent reproducing material,
(v) producing a slide by means of said visible image.

Since films used in hard copy recorders commonly have a format that permits the recording of a multiplicity of radiographic images in slide format, the invention provides an alternative procedure for producing slides of a number of radiographic images.

This alternative method comprises the steps of
(i) identifying radiographic images ,
(ii) retrieving a digital image representation of each of the identified radiographic images from an electronic archive,
(iii) extracting from each of the retrieved digital image representations a reduced version representing a low resolution version of said radiographic image,
(iv) forming a composite image signal representing a composite image by means of the reduced versions so that the composite image comprises a low resolution image version for each identified radiographic image,
(v) applying said composed image signal to a hard copy recorder to generate a composed visible image on a single hard copy material, said visible image comprising a low resolution version having slide format of each of the identified radiographic images on a transparent reproducing material,
(vi) dividing said composed visible image into individual visual images of slide format,
(vii) producing a slide by means of each of said individual visual images.

A visible image having slide format can be recorded on different kinds of transparent material by applying different kinds of recording techniques. Examples are: image recording by exposing a photographic material to image-wise modulated light, image recording by subjecting a thermal recording material to an image-wise modulated heat. Still other alternatives are possible.

In classic radiographic imaging techniques wherein a radiographic film was directly exposed to a radiographic image, it would have been impossible to make a slide of the radiographic image.

Image acquisition systems that render a digital representation of a radiographic image provide the possibility of producing slides of the images on a work station. These slides are a particular convenient tool for presenting the radiographic image to a broad audience.

A low resolution version of a radiographic image can be obtained by interpolating (subsampling) the digital representation of the image.

In most cases however, radiographic images that are made available in the form of a digital image representation, are subjected to image processing.

One of these techniques is based on a decomposition of the image into a multi-resolution representation comprising detail images at multiple resolution levels and a residual image. The decomposition process is such that a reconstruction procedure exists that, when it is applied to the residual image and the unmodified detail images, it would render the original image or a close approximation thereof.

Preferably the decomposition has a pyramidal format, this means that the number of pixels in detail images at successive resolution levels decreases.

When such a decomposition has been applied to an original radiographic image, it is convenient to use for the low resolution image version a partially reconstructed image whereby the reconstruction is limited to an intermediate of the resolution levels of the decomposed image. This intermediate resolution level is then selected so that the resolution level corresponds with the resolution of a slide.

For example, a slide of 24 mm X 36 mm that is printed by means of a printer that has a resolution of approximately 12 pixels per mm, comprises approximately 300x450 pixels.

The intermediate resolution level that comprises the largest number of pixels not exceeding 300x450 pixels can then be selected.

The image processing is performed on the decomposed image representation. For example, contrast enhancement is obtained by subjecting the detail image at at least one resolution level to a modification consisting of the conversion of the pixel values of the detail image into modified pixel values of a modified detail image by application of a monotonically increasing odd mapping value with a slope that gradually decreases with increasing argument values.

Application of other conversion functions for the purpose of other objectives are possible.

It is possible to apply the same processing to the detail images that are used for the production of a slide (the low resolution version) than would have been applied to the full image representation.

In this way the effect of the applied image processing can be shown.

### 5. Brief description of the drawings

Particular aspects of the present invention as well as preferred embodiments thereof will be explained by means of the corresponding drawings wherein
Fig. 1 generally shows a system in which the method of the present invention can be applied,
Fig. 2 illustrates read-out of a radiation image that has been stored in a photostimulable phosphor screen,
Fig. 3 illustrates an embodiment of a decomposition process,
Fig. 4 is a plot of a specific modifying function that can be used in a method of the present invention,
Fig. 5 illustrates an embodiment of a reconstruction algorithm.

### 6. Detailed description

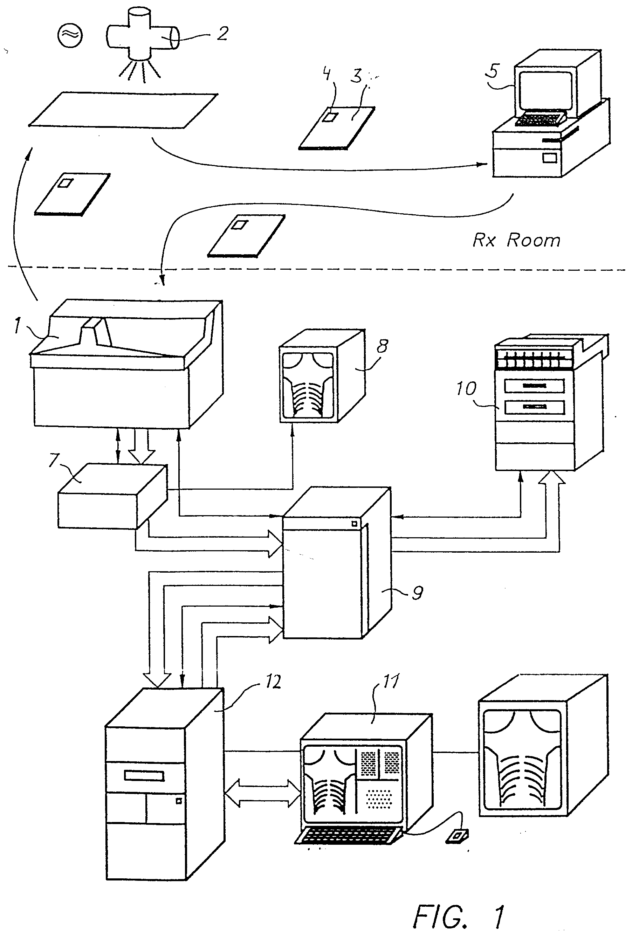

Figure 1 generally shows an apparatus in which the method of the invention can be applied.

The system comprises an exposure unit with an X-ray source 2 for exposing a photostimulable phosphor screen to X-rays transmitted by a patient, an identification station (5) for identifying a cassette conveying a photostimulable phosphor screen, a read-cut (1) and processing (7) station, a preview monitor (8), a workstation (11, 12) and a hard copy recorder (10) with associated buffer (9).

A radiation image of an object was recorded on a photo-stimulable phosphor screen by exposing said screen to X-rays emitted by an X-ray source (2) and transmitted through the object (not shown). The stimulable phosphor screen was conveyed in a cassette (3) provided with an electrically erasable programmable read only memory (EEPROM) (4). In the identification station (5) various kinds of data, for example patient identification data (name, date of birth) and data relating to the exposure and/or to the signal processing were written into the EEPROM.

Then, the exposed cassette was fed into read-out station (1).

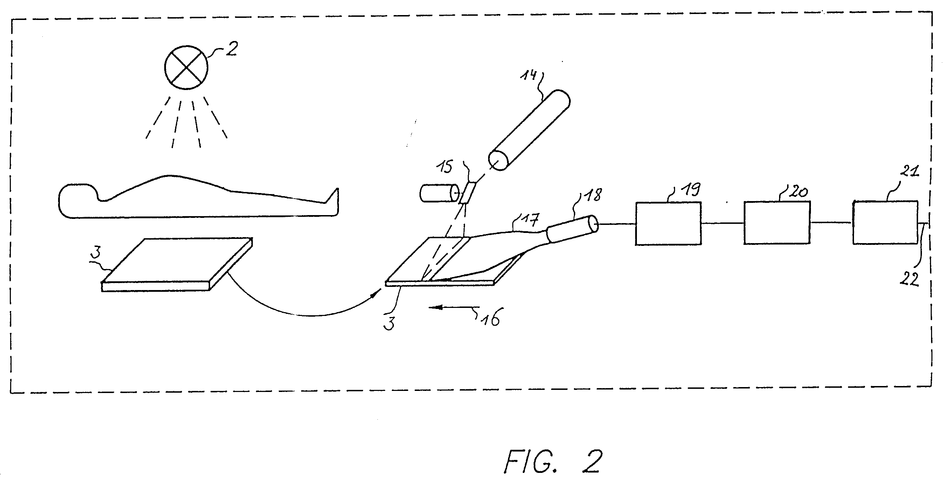

The read-out operation is shown in figure 2.

In the radiation image read-out station 1 the image stored in the photo-stimulable phosphor screen was read-out by scanning the phosphor screen with stimulating rays emitted by a laser (14). The stimulating rays were deflected into the main scanning direction by means of galvanometric deflection (15). The subscanning was performed by transporting the phosphor screen in the subscanning direction indicated by arrow (16). The stimulated emission was directed onto a photomultiplier (18) for conversion into an electrical image representation. Additionally the information stored in the EEPROM was read.

The output signal of the photomultiplier was converted by a square root amplifier (19), and next the signal was sampled by a sample and hold device (20) and quantised by an A/D converter (21). This quantised image signal, called the raw image signal (22), was sent to the image processing module of the read-out apparatus (figure 1, numeral 7) where it was subjected to a decomposition into a multi-resolution image representation. The decomposed image was also sent from the image processor to the image workstation (11, 12) where it was temporarily stored on a hard disc.
In processing module (7) the decomposed image signal was further processed taking into account the processing parameters associated with the data read out from the EEPROM (4) on the cassette conveying the photo-stimulable phosphor screen.

In the decomposition process the raw image signal (22) was decomposed into a sequence of detail images b₀, b₁, ...b_{L-1} which represent the amount of detail present in the raw image at multiple resolution levels, from fine to coarse. After the last decomposition step a residual image g_{L} was left.

The decomposition process is such that a reconstruction procedure exists that, when it is applied to the residual image and the unmodified detail images, it would render the original image or a close approximation thereof.

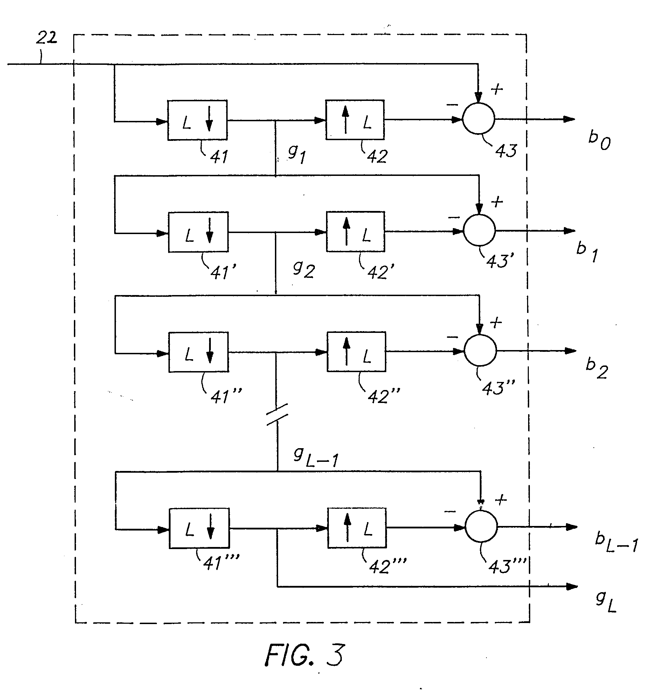

One embodiment of the decomposition process is illustrated in Fig. 3. Other embodiments that are applicable are described in European patent application EP-A-527 525.

The raw image (22) is filtered by a low pass filter (41), and subsampled by a factor of two, which is implemented by computing the resulting low resolution approximation image g₁ only at every other pixel position of every alternate row.

A detail image b₀ at the finest resolution level is obtained by interpolating the low resolution approximation image g₁ with doubling of the number of rows and columns, and pixelwise subtracting the interpolated image from the raw image.

The interpolation is effectuated by an interpolator (42), which inserts a column of zero values every other column and a row of zero values every other row respectively, and next convolves the extended image with a low pass filter. The subtraction is done by an adder (43).

The same process is repeated on the low resolution approximation g₁ instead of the raw image, yielding an approximation of still lower resolution g₂ and a detail image b₁.

A sequence of detail images bᵢ, i=0...L-1 and a residual low resolution approximation g_{L} are obtained by iterating the above process L times.

The finest detail image b₀ has the same size as the raw image.

The next coarser detail image b₁ has only half as many rows and columns as the first detail image b₀. At each step of the iteration the maximal spatial frequency of the resulting image is only half that of the previous finer detail image, and also the number of columns and rows is halved, in accordance with the Nyquist criterion.

After the last iteration a residual image g_{L} is left which can be considered to be a very low resolution approximation of the raw image. In the extreme case it consists of only one pixel which represents the average value of the raw image.

These detail images and the residual image are then sent to the work station (11, 12) for archival and later processing on the one. hand and they are subjected to on-line processing in processing module (7) of the read out apparatus (1) on the other hand.

The method of the present invention is then applied to the detail images archived in the workstation.

The embodiment described hereafter relates to the production of a number of slide format radiographic images on a single hard copy film.

Images to be reproduced on a single hard copy material were first identified by entering specifics on these images, for example name of patient, data of examination etc. on the workstation.

Then, the identified images were retrieved from memory.

Next, a low resolution image was computed by applying a reconstruction algorithm to the retrieved residual image and to the retrieved detail images up to an intermediate of the multiple resolution levels of the detail images, the reconstruction algorithm being such that if it were applied to the unmodified detail images and the residual image, then the raw image or a close approximation thereof would result.

The intermediate resolution level is selected so that the retrieved images can all be reproduced on a single hard copy material.

In this embodiment 20 slide images of dimensions 24 mm x 36 mm were to be printed on a photographic film having the dimensions 203,2 mm x 254,0 mm (8 inch x 10 inch).

The resolution of the slide images depends on the resolution of the recorder that is used for reproducing the slide images. In case of the recorder described hereafter, this resolution is 12,4 pixels/mm so that a slide comprises 448 x 299 pixels.

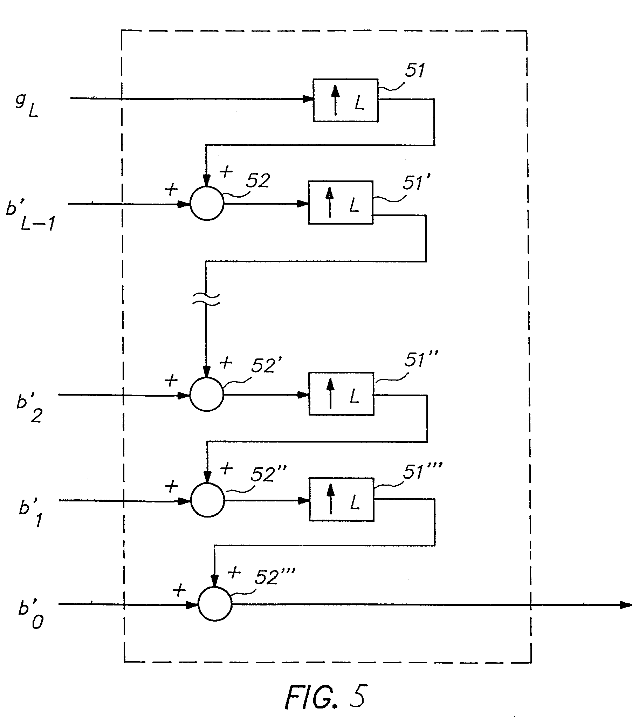

One embodiment of such a reconstruction algorithm is illustrated in figure 5, other embodiments can be found in the above mentioned European application EP-A-527 525.

In the reconstruction process, the residual image g_{L} is first interpolated by means of an interpolator (51) to twice its original size and the interpolated image is then pixelwise added to the detail image of the coarsest level b'_{L-1}, using an adder (52).

The resulting image is interpolated and added to the next finer detail image. If this process is iterated L times using the unmodified detail images b_{L-1} ... b₀, then an image equal to the raw image will result. If, at the other hand the detail images are modified before reconstruction, then a processed image, for example a contrast enhanced image will result. The interpolators are identical to those used in the decomposition section.

The low resolution image version that will be used for the composition of the composed image to be recorded on a single photographic film then consists of an image generated during the reconstruction process being limited up to some intermediate resolution level which is lower than the original resolution.

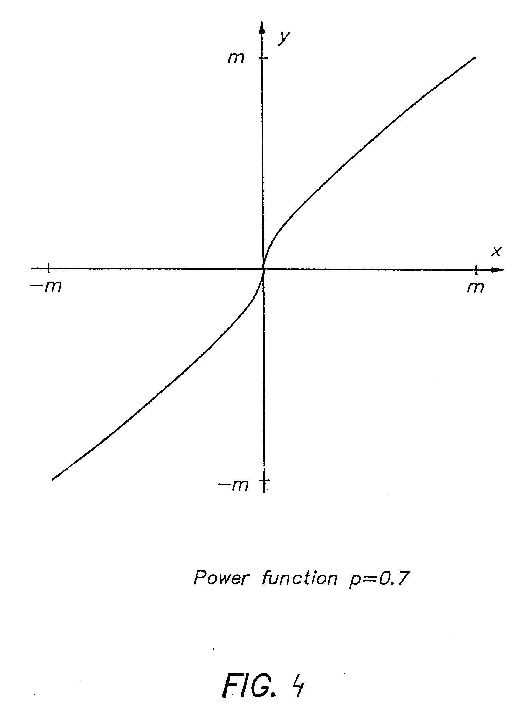

It is also possible to apply signal processing to the pixel values of the retrieved detail images before reconstruction . For example, for the purpose of contrast enhancement, the pixel values of the detail images can be modified to yield pixel values of modified detail images . Preferably the modification is performed by applying to the pixel values of the detail images (or to pixel values of some of the detail images ) at least one non-linear monotonically increasing odd mapping function with a slope that gradually decreases with increasing argument values. Figure 4 is a plot of a specific modifying function that can be used in a method of the present invention.

The above described embodiment including modification of the detail images is advantageous in that the reconstructed images that are used for composition of the composed image have an enhanced image quality.

Finally, by means of the reconstructed image signals a composite image signal is generated and the composite signal is applied to a laser recorder for reproduction of a composite image comprising a low resolution version of each of the identified images.

An example of a laser recorder capable of accepting image signals in either analogue or digital form is the laser printer marketed by Agfa-Gevaert N.V. under the registered trade mark MATRIX COMPACT L.

This laser printer is suitable for recording the radiographic images generated by a digital radiographic system based on storage phosphor technology, or generated by other digital diagnostic techniques such as CT, MR and DSA.

Films suitable for being used in such laser printers are e.g. the photographic films marketed by Agfa-Gevaert N.V. under the registered trade marks SCOPIX LT, available in the following film formats : 20,3mm x 25,4mm (8inch x 10inch), 38mm x 27.9mm (14inch x 11inch) or 38mm x 43mm (14inch x 17inch).

Another example of a suitable laser printer is the MATRIX LR 3000 printer.

## Claims

1. Method of producing a slide of a radiographic image represented by a digital image representation, that has been stored in an electronic archive comprising the steps of
(i) identifying said radiographic image,
(ii) retrieving the digital image representation of said radiographic image from said electronic archive,
(iii) extracting from said digital representation a reduced version representing a low resolution version of said radiographic image, said reduced version having a resolution equal to the resolution of a slide,
(iv) applying said reduced version of the digital image representation to a hard copy recorder to generate a visible image having a slide format on a transparent reproducing material,
(v) producing a slide by means of said visible image.

2. Method of producing slides of a number of radiographic images each being represented by a corresponding digital image representation that has been stored in an electronic archive, comprising the steps of
(i) identifying said radiographic images,
(ii) retrieving the digital image representation of each of the identified radiographic images from the electronic archive,
(iii) extracting from each of the retrieved digital image representations a reduced version representing a low resolution version of said radiographic image,
(iv) forming a composite image signal representing a composite image by means of the reduced versions so that the composite image comprises a low resolution image version for each identified radiographic image,
(v) applying said composed image signal to a hard copy recorder to generate a composed visible image comprising a low resolution version having slide format for each of the identified radiographic images on a transparent reproducing material,
(vi) dividing said composed visible image into individual visual images of slide format,
(vii) producing a slide by means of each of said individual visual images.

3. A method according to claim 1 or 2 wherein said digital image representation is a multi-resolution image representation obtained by applying to an original digital image representation of a radiographic image that has been acquired by a digital image acquisition device a decomposition process comprising the following steps:
- decomposing the original image representation into a sequence of detail images and a residual image, said decomposition process being such that a reconstruction process exists so that upon application of said reconstruction process to the residual images and the detail images said original digital image representation or a close approximation thereof, is obtained and wherein
- a low resolution version is obtained by applying said reconstruction process to detail images up to an intermediate of said multiple resolution levels, said intermediate level being selected so that the resolution of the low resolution version is adapted to slide format.

4. A method according to claim 3 wherein said digital image representation is decomposed into a pyramidal sequence of detail images at multiple resolution levels and a residual image.

5. A method according to claim 3 wherein said detail images are modified before being subjected to said reconstruction processing.

6. A method according to claim 5 wherein said modification comprises application to at least one of the detail images of a monotonically increasing odd mapping function with a slope that gradually decreases with increasing argument values.

7. A method according to claim 1 or 2 wherein said low resolution version is obtained by subsampling said original digital image representation.

8. A method according to claim 1 or 2 wherein said low resolution version is obtained by interpolating said original digital image representation.

9. A method according to claim 1 or 2 wherein said digital image representation is obtained by scanning a photostimulable phosphor screen wherein a radiographic image has been stored with stimulating irradiation, detecting light emitted upon stimulation and converting the detected light into a digital image representation.

10. A method according to claims 1 or 2 wherein said digital image representation is obtained by scanning an exposed radiographic film by means of a light beam, detecting image-wise modulated light and converting detected light into a digital signal.
